# NEW EUROPEAN PATENT SPECIFICATION

(11) **EP 0 623 443 B2**
(45) Date of publication and mention of the opposition decision: **06.08.2003**
(45) Mention of the grant of the patent: 14.08.1996
(21) Application number: 93830051.4
(22) Date of filing: 12.02.1993
(51) Int. Cl.: B29C 45/14

(54) **A method and device for the production of lined panels by low presssure injection.**
Verfahren und Vorrichtung zur Herstellung überzogener Paneele durch Niederdruckspritzgiessen
Procédé et dispositif pour la production de panneaux revêtus par moulage par injection à basse pression

(43) Date of publication of application: 09.11.1994
(73) Proprietor: Johnson Control S.P.A., 22050 Lomagna (CO) (IT)
(72) Inventor: Vecchiarino, Luigi, I-20069 Vaprio d'Adda (MI) (IT)
(74) Representative: Gislon, Gabriele

(56) References cited:
- EP-A- 0 491 682
- EP-A- 0 497 335
- PATENT ABSTRACTS OF JAPAN vol. 12, no. 296 (M-731)(3143) 12 August 1988 & JP-A-63074617 (AKINOBU TATEBAYASHI)
- PATENT ABSTRACTS OF JAPAN vol. 13, no. 577 (M-910)(3925) 20 December 1989 & JP-A-01241416 (NISSHA PRINTING CO. LTD)
- A. Jaeger et al.: Machine Technology and Process Control for In-mould Surface Decoration (ISD) in: plast europe, 03/1992, pages 43 and 44

## Description

The present invention concerns a method and a device for the production of lined panels by means of low pressure injection.

In particular the invention concerns a method and a device for the production of lined panels wherein a sheet of lining material is introduced into a mold and shaped simultaneously with the thermoplastic material injected at the fluid state and constituting the panel support.

Panels of this type find application in the motorcar sector to obtain inside door coverings, sun screens, posts covers, back and front shelves and the like, as well as in the furniture sector to cover furniture, chairs, complementary items and the like.

Methods and processes wherein it is envisaged to shape a flat lining sheet made of deformable material by directly introducing it into the mold where a thermoplastic material is subsequently injected, are already currently known.

In particular the patent application N. Ml 91A000257 corresponding to EP-A-0 497 335, filed by the same Applicant, concerns a method for the production of lined panels that envisages the positioning of a lining made of shapable material inside a mold, the mold sealing and the subsequent injection of a thermoplastic material into the mold itself that shapes the lining and matches therewith to form the finished panel. The injection is preferably performed in more points of the mold and at high pressure to allow a more rapid and homogeneous distribution of the material, moreover avoiding the premature cooling of the thermoplastic material getting in contact with the surfaces of the mold and the lining.

The European application N. EP 320925, filed by BMW AG and Dynamit Nobel AG, concerns a method for the production of lined panels that envisages the positioning of a lining made of shapable material, preshaped or in a flat form, inside a mold. The mold is then sealingly closed in a way that the subsequent injection of thermoplastic material and inert gas into a single point of the mold itself allows the shaping of the lining and the formation of an internally hollow product.

A series of sucking channels are provided that allow to create depression in the space comprised between the external surface of the lining and the internal surface of the mold facing thereto, in order to improve the adhesion of the lining sheet to the mold surface. Through a series of channels provided inside the mold a refrigerating fluid is circulated to allow the rapid cooling of the thermoplastic material injected and therefore the improvement of the production rate. The pressure of injection is preferably ranging between 50 and 100 bars, but it is also possible to operate in the pressure range generally provided by most of currently known presses, namely between 10 and 130 bars.

In any case, the selection of the pressure of injection depends on multiple factors, such as the type of thermoplastic material used, the injection temperature as well as the characteristics of the lining material.

The quality of the finished product is on its turn affected by the injection pressure of the thermoplastic material that shapes the lining. An excessive pressure can cause undesired deformations on the lining, thus jeopardizing the aesthetical appearance of the panel. In particular it is not possible to effectively perform high pressure injection on lining materials that are already provided with decorative patterns on their outer surface, since the deformations resulting therefrom are such as to spoil the desired aesthetical appearance. Similar problems arise when using multi-layer linings, such as for instance linings provided with an underlayer of soft material that gives a particular softness to the touch.

Furthermore, also in the case in which it is necessary to perform a certain stretching of the lining, e.g. to create the so called "leather effect", it may be necessary to inject the thermoplastic material at high pressure, but this does not guarantee the result of an esthetically valid product.

On the contrary, if the injection of the thermoplastic material is performed at low pressure according to known methods, premature coolings may occur in certain areas far from the injection points thus compromising the homogeneity of distribution of the panel support material. An object of the present invention is to provide a process for the mass production of lined panels, allowing a perfect shaping of the liner with a reduction or an elimination of deformations to which it is subject.

Another object of the present invention is to allow a mass production of lined panels, wherein the lining already presents decorative patterns on its external surface, without causing the deformation of the lining itself during the injection of the support thermoplastic material.

A further object of the present invention is to allow the production of lined panels with improved homogeneity of distribution of the support material.

These objects are achieved by means of the present invention that concerns a method for the production of lined panels, of the type comprising the simultaneous coupling and injection molding of the support of said panel with the relevant lining, characterized in that it comprises the steps of:
positioning a lining of shapable material in tape or sheet between two half-molds of matching shape;
approaching said half-molds as far as a preset distance ranging between 70% and 80% of the lining thickness;
injecting a thermoplastic material, at the plastic state, at a pressure below 50 bar in more points of the mold by means of injectors independently controlled as far as temperature and flow rate are concerned, sealing between said half-molds being assured by said sheet or tape of the lining material; and
cutting said panel thus formed in correspondence with its border before removing it from the mold.

According to a preferential feature of the invention, the injection of the thermoplastic material is carried out at a pressure of about 20 bar.

The low pressure injection of the thermoplastic material prevents the lining deformation and allows to obtain sufficient sealing between the two half-molds thanks to the lining material alone.

The optimal distribution of the support material is obtained by injecting it at the plastic state in more points of the mold by means of injectors independently controlled as far as temperture and flow rate are concerned.

These and other advantages will become more evident from the following description given by way of illustration and without limiting purposes with reference to the accompanying drawings, wherein:
- figure 1 is a sectional view of a mold before its closure;
- figure 2 is a view of the mold of figure 1 after its closure;
- figure 3 is a sectional view of the dosed mold after the injection of the thermoplastic material;
- figure 4 is a sectional magnified view of a detail of the closed mold before the injection of the thermoplastic material; and
- figure 5 is a sectional magnified view of the detail of figure 3 after the injection of the thermoplastic material.

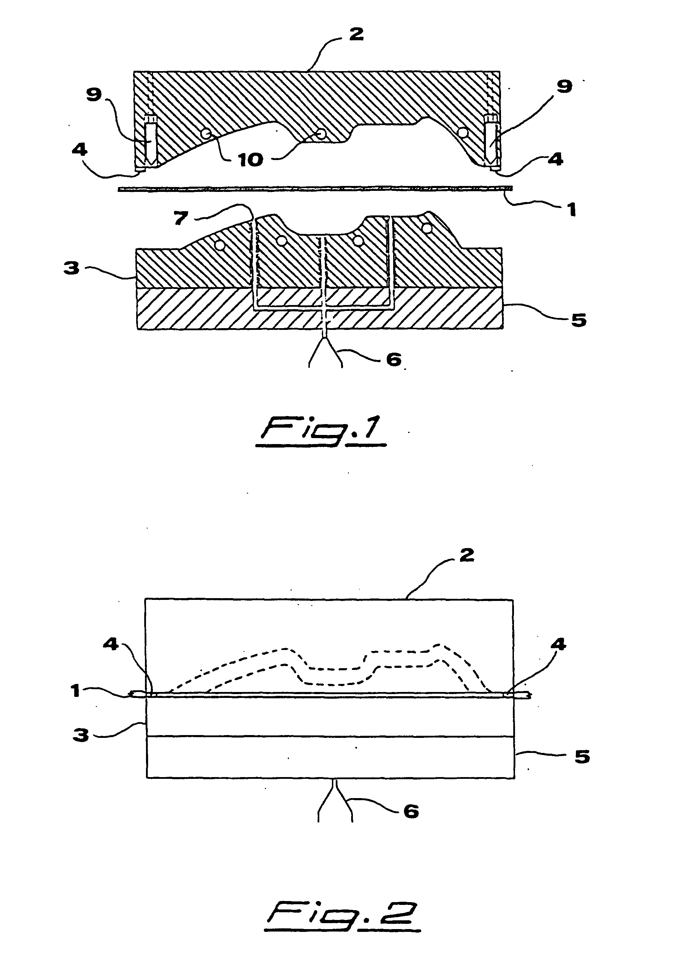

Figure 1 shows the first step of the method that involves the arrangement of a sheet or tape 1 of the lining shapable material between half-molds 2 and 3.

The half-mold 2 is advantageously equipped with spacers 4 that allow to close the mold keeping the half-molds 2 and 3 at a distance ranging between 70% and 80% of the thickness of the lining material 1.

Spacers 4 directly rest on the surface of the opposite half-mold, in this case the half-mold 3, in a way not to interfere with the lining 1 and to allow the feeding thereof during the injection step.

Figure 2 represents the mold in the subsequent steps of the method wherein the two half-molds 2 and 3 are approached as far as a distance determined by spacers 4 is left therebetween in order to allow the injection of the thermoplastic material and the formation of the panel.

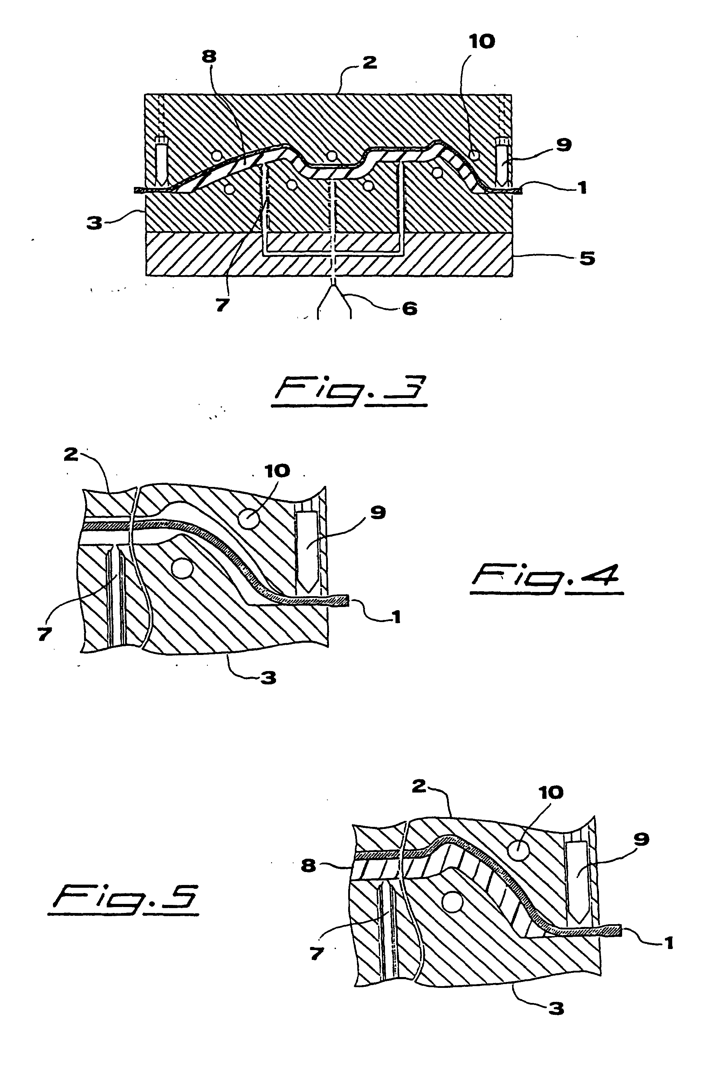

As illustrated in figure 3, the injection of the thermoplastic material 8 allows to shape the lining 1 that is pressed against the internal surface of the cavity provided in the half-mold 2.

According to an advantageous feature of the invention the thermoplastic material 8 is injected in more points of the mold at low pressure by using a dispensing unit 5 that allows the control of the temperature of the material 8 supplied by the press 6 and distributed to injectors 7, the latter ones being independently controlled for temperature and flow rate.

Figures 4 and 5 show a magnified view of a detail of the mold before and after the injection step of the thermoplastic material, respectively.

Figure 4 represents the half-molds 2 and 3 between which the not yet shaped lining 1 is positioned.

The distance kept between the half-molds 2 and 3 allows the lining 1 to be locally fed to the mold during the injection of the thermoplastic material thus avoiding undesired deformations of the lining 1 itself. It is thus possible to produce lined panels wherein the lining is already provided with decorative pattern on its external surface.

Figure 5 represents the same view of figure 3 in the step immediately following the injection of the thermoplastic material and the formation of the support layer 8.

According to an advantageous feature of the method, the thermoplastic material is injected at low pressure, in particular at pressures below 50 bar and, preferably, at a pressure of about 20 bar.

Jointly using the low pressure injection and the temperature and flow rate control, the sealing between the half-molds 2 and 3 is ensured by the lining 1 since, in the vicinity of the internal edges of the shape, the thermoplastic material gets rapidly cool and has not a sufficient pressure to escape from the space comprised between the half-mold 3 and the lining 1.

The last step of the method involves the trimming of the panel by its cutting by means of movable blades 9 provided in the half-mold 2.

The invention also concerns a device for the production of lined panels by injection of thermoplastic material on a lining material in sheet or tape, of the type comprising a mold divided into two half-molds of matching shape, a dispensing unit of said thermoplastic material to said mold and a plurality of injectors for the injection of said thermoplastic material, characterized in that it comprises spacing means adjustable to keep said half-molds at a preset distance; in that said injectors are positioned in different points of the mold and independently controlled as to flow rate; and in that said dispensing unit and said injectors are independently controlled as to temperature.

According to a preferred embodiment of the invention spacers 4 are adjustable, for instance by means of a screw coupling with relevant female thread provided in the half-mold 2 in order to allow said mold to be suitable for linings of different thickness.

Alternatively spacers 4 can be obtained with calibrated thicknesses to be introduced in appropriate seats provided in any of the two half-molds 2 and 3.

In the preferred embodiment of the device, spacers 4 are suitable for keeping the half-molds 2 and 3 at a minimum distance ranging between 70% and 80% of the thickness of the lining 1.

Again with reference to figure 1, the dispensing unit 5 of the thermoplastic material is positioned between the feeding press 6 and the injectors 7.

According to an advantageous feature of the invention the dispensing unit 5 and the injectors 7 are independently controlled in temperature in order to allow the distribution of the thermoplastic material at the plastic state in more points of the mold even injecting at low pressure. Possible coolings are thus avoided that might jeopardize the homogeneous distribution of the material itself inside the mold. For the same reason injectors 7 are also independently controlled in flow rate so that they can supply the correct quantity of material in correspondence to each point of injection.

In the preferred embodiment a circuit 10 for the temperature conditioning of the mold, namely a circuit wherein a thermal exchanging fluid is circulated, is foreseen, allowing to cool or heat the mold according to requirements.

The process and the device according to the invention allow the mass production of panels using different types of lining such as for instance PVC, velvet, wowen fabric or non wowen fabric consisting of polyester, nylon or cotton fibers.

## Claims

1. A method for the production of lined panels, of the type comprising the steps of positioning a lining (1) of shapeable material, in tape or sheet, between two half molds (2,3), injection molding a thermoplastic material (8) to form the support of said panel, and cutting the formed panel in correspondence to its border before its removal from said half molds, **characterized in that** it further comprises the steps of approaching said half molds (2,3) as far as a preset distance having a value within the range of 70 % to 80 % of the thickness of the lining material (1) and injecting said thermoplastic material (8) at a pressure below 50 bar in more points of the mold (3) by means of injectors (7) independently controlled in temperature and flow rate, the sealing between said half molds (2,3) being performed by said sheet or tape of lining material (1).

2. A method according to claim 1, wherein said injection of thermoplastic material (8) is carried out at a pressure of about 20 bar.

3. A device for the production of lined panels by means of injection of a thermoplastic material (8) on a lining material (1) in sheet or tape, of the type comprising a mold formed by two half molds (2,3) of matching shape, a dispensing unit (5) of said thermoplastic material (8) to said mold and a plurality of injectors (7) for the injection of said thermoplastic material, **characterized in that** it further comprises spacing means (4) adjustable to space said half molds (2,3) at a preset distance; **in that** said injectors (7) are located at different points of the mold and independently controlled in flow rate; and **in that** said dispensing unit (5) and said injectors (7) are independently controlled in temperature.

4. A device according to claim 3, wherein said spacing means (4) are adjustable to space the half molds (2,3) to a distance within the range of 70% to 80% of the thickness of said lining material (1).

5. A device according to claim 3 or 4, wherein said spacing means (4) rest on the opposite half mold (3) surface to allow feeding of said lining material (1) during said injection of thermoplastic material (8).

6. A device according to any claim 3 to 5, wherein said half molds are provided with means (10) for their heating or cooling.

## Patentansprüche

1. Verfahren zur Herstellung von kaschierten Paneelen, umfassend die Schritte des Positionierens einer Kaschierung (1) aus formbarem Material in Band- oder Bahnenform zwischen zwei Halbformen (2, 3), Spritzgießens eines Thermoplastmaterials (8) zum Bilden des Trägers des Paneeles und Schneidens des geformten Paneeles entsprechend seinem Rand vor seiner Entfernung aus den Halbformen, **gekennzeichnet dadurch, daß** es außerdem die Schritte des Annäherns der Halbformen (2, 3) so weit, daß ein vorgegebener Abstand einen Wert in dem Bereich von 70 % bis 80 % der Dicke des Kaschiermaterials (1) hat, und Einspritzens des Thermoplastmaterials (8) mit einem Druck unter 50 bar an mehreren Punkten der Form (3) mit Hilfe von Injektoren (7) umfaßt, die in der Temperatur und Durchflußgeschwindigkeit unabhängig geregelt werden, wobei die Dichtung zwischen den Halbformen (2, 3) durch die Bahn oder das Band des Kaschiermaterials (1) ausgeführt wird.

2. Verfahren nach Anspruch 1, bei dem das Einspritzen des Thermoplastmaterials (8) mit einem Druck von ungefähr 20 bar ausgeführt wird.

3. Vorrichtung zur Herstellung von kaschierten Paneelen mit Hilfe des Einspritzens eines Thermoplastmaterials (8) auf ein Kaschiermaterial (1) in Bahnen- oder Bandform, umfassend eine durch zwei Halbformen (2, 3) mit zusammenpassendem Profil gebildete Form, eine Verteilereinheit (5) des Thermoplastmaterial (8) zu der Form und eine Vielzahl von Injektoren (7) für das Einspritzen des Thermoplastmaterials, **gekennzeichnet dadurch, daß** sie außerdem Abstandhaltermittel (4) umfaßt, die einstellbar sind, um die Halbformen (2, 3) in einen vorgegebenen Abstand zu bringen; daß die Injektoren (7) an verschiedenen Punkten der Form angeordnet sind und in der Durchflußgeschwindigkeit unabhängig geregelt werden; und daß die Verteilereinheit (5) und die Injektoren (7) in der Temperatur unabhängig geregelt werden.

4. Vorrichtung nach Anspruch 3, bei der die Abstandhaltermittel (4) einstellbar sind, um die Halbformen (2, 3) in einen Abstand innerhalb des Bereiches von 70 % bis 80 % der Dicke des Kaschiermateriales (1) zu bringen.

5. Vorrichtung nach Anspruch 3 oder 4, bei der die Abstandhaltermittel (4) auf der gegenüberliegenden Fläche der Halbform (3) ruhen, um das Zuführen des Kaschiermateriales (1) während des Einspritzens des Thermoplastmaterials (8) zuzulassen.

6. Vorrichtung nach den Ansprüchen 3 bis 5, bei dem die Halbformen mit Mitteln (10) für ihre Erwärmung oder Abkühlung versehen sind.

## Revendications

1. Procédé pour la production de panneaux revêtus,du type comprenant les étapes de mise en place d'un revêtement (1) en matière formable, en bande ou en feuille, entre deux demi-moules (2,3), de moulage par injection d'une matière thermoplastique (8) pour constituer le support du dit panneau, et de coupe du panneau formé, en correspondance de son bord, avant de l'enlever desdits demi-moules, **caractérisé en ce qu'**il comprend en outre les étapes de rapprochement mutuel desdits demi-moules (2,3) jusqu'à une distance mutuelle prédéterminée ayant une valeur comprise entre 70% et 80% de l'épaisseur de la matière de revêtement (1), et d'injection de ladite matière thermoplastique (8) à une pression inférieure à 5 MPa en plusieurs points du moule (3) au moyen d'injecteurs (7) réglés de façon indépendante en température et en débit, la fermeture étanche entre lesdits demi-moules (2,3) étant assurée par ladite feuille ou bande de matière de revêtement (1).

2. Procédé suivant la revendication 1, dans lequel ladite injection de matière thermoplastique (8) est effectuée à une pression de 2 MPa environ.

3. Dispositif pour la production de panneaux revêtus par injection d'une matière thermoplastique (8) sur une matière de revêtement (1) en feuille ou en bande, du type comprenant un moule constitué par deux demi-moules (2,3) de forme complémentaire, un distributeur (5) de dite matière thermoplastique (8) audit moule et une pluralité d'injecteurs (7) pour l'injection de dite matière thermoplastique, **caractérisé en ce qu'**il comprend en outre des moyens d'espacement (4). réglables pour espacer lesdits demi-moules (2,3) à une distance prédéterminée l'un de l'autre ; **en ce que** lesdits injecteurs (7) sont placés à différents points du moule et réglés de façon indépendante en débit et **en ce que** ledit distributeur (5) et lesdits injecteurs (7) sont réglés de façon indépendante en température.

4. Dispositif suivant la revendication 3, dans lequel lesdits moyens d'espacement (4) sont réglables de manière à espacer les demi-moules (2,3) à une distance l'un de l'autre comprise entre 70% et 80% de l'épaisseur de ladite matière de revêtement (1).

5. Dispositif suivant la revendication 3 ou 4, dans lequel lesdits moyens d'espacement (4) reposent sur la surface du demi-moule opposé (3) pour permettre un mouvement de ladite matière de revêtement (1) pendant la dite injection de matière thermoplastique (8).

6. Dispositif suivant une quelconque des revendications 3 à 5, dans lequel lesdits demi-moules sont pourvus de moyens (10) pour leur chauffage ou leur refroidissement .
